# EUROPEAN PATENT SPECIFICATION

(11) **EP 3 870 768 B1**
(45) Date of publication and mention of the grant of the patent: **29.11.2023**
(21) Application number: 19875476.4
(22) Date of filing: 10.10.2019
(51) Int. Cl.: E04B 9/06, F16M 13/00, F16F 1/376, F16F 1/373, E04B 2/76, E04B 2/74, E04B 1/38, E04B 1/62, E04F 13/21, E04F 13/08, E04B 9/00, E04B 9/18, E04B 9/04, H02G 3/04, H02G 3/00

(54) **A CLIP FOR MOUNTING A FURRING CHANNEL TO A SUPPORT STRUCTURE**
EINE KLEMME ZUR BEFESTIGUNG EINES VERKLEIDUNGSPROFILS AN EINER TRÄGERSTRUKTUR
UN CLIP POUR FIXER UN PROFILÉ DE FOURRURE À UNE STRUCTURE DE SUPPORT

(30) Priority: 23.10.2018 AU 2018101589; 07.12.2018 AU 2018102026
(43) Date of publication of application: 01.09.2021
(73) Proprietor: Rocheway Pty Ltd, Bulimba, Brisbane QLD 4171 (AU)
(72) Inventor: POTTER, Graeme, Brisbane, Queensland 4171 (AU)
(74) Representative: Greaves Brewster LLP
(86) International application number: PCT/AU2019/051097
(87) International publication number: WO 2020/082110

(56) References cited:
- EP-A1- 1 213 405
- FR-A1- 2 508 079
- US-A1- 2008 086 966
- US-A1- 2015 013 244
- US-A1- 2017 044 767
- US-A1- 2017 044 773
- US-A1- 2018 238 052
- US-B2- 8 549 809
- US-B2- 9 121 469
- Anonymous: "Resilmount A237CR CRC Clips for Drop Ceiling Applications", tmsoundproofing , 15 June 2017 (2017-06-15), pages 1-3, XP055809439, Retrieved from the Internet: URL:https://www.tmsoundproofing.com/TMS-Si lent-Clips-A237CR-Clips-For-Drop-Ceiling-A pplications.html [retrieved on 2019-12-19]

## Description

### FIELD OF INVENTION

The present invention relates to a clip. The present invention has particular but not exclusive application for mounting a furring channel onto a support structure such as existing building wall or ceiling structures to provide a furring support framework for wall or ceiling cladding. The patent specification describes this use but it is by way of example only and the invention is not limited to this use.

### BACKGROUND OF THE INVENTION

Walls and ceilings of buildings are sometimes clad with wall or ceiling cladding to provide an aesthetical appearance, or to cover utilities such as power cables, water pipes, HVAC ducts or the like.

The wall or ceiling cladding is typically secured to the existing wall or ceiling by a support framework of furring channels. The wall or ceiling cladding is typically secured to the furring channels using fasteners such as screws. The furring channels are attached to the wall or ceiling by clips (also referred to as furring channel clips) which are attached on to the wall or ceiling in a spaced apart manner. The furring channels are secured to the clips by positioning them over and snapping them into the clips.

One problem that can arise from such a configuration is a lack of space to accommodate utilities. A prior art solution to this problem is to provide a furring channel of greater thickness.

Another problem that can arise by securing the clips to the wall or ceiling and the wall or ceiling cladding to the furring channels is that vibrations and noise can travel from the wall or ceiling to the wall or ceiling cladding.

One prior art solution to mitigating the transmission of vibration or sound is to provide an underlay between the clip and the wall or ceiling and/or between the wall or ceiling cladding and the furring channel.

Known in the art are mounting clips for drop ceiling applications which are described in the website publication "Resilmount A237CR CRC Clips for Drop Ceiling" by Trademark Soundproofing dated 15 June 2017 which discloses a mount for use with a hat channel system for drywall ceiling applications or for use with any joist, or concrete applications.

Known in the art is United States patent US 2008/086966 A1 (Stevens) which discloses an acoustic mount for dampening vibrations between two structures mounted or coupled in use to each other.

Known in the art is United States patent US 2017/044773 A1 (Gernhart) which discloses an acoustic leveling clip corresponding to the preamble of claim 1 and which includes an insert formed from a flexible, acoustically insulating material.

Known in the art is United States patent US 9 121 469 B2 (Downey) which discloses an energy transmission control mount comprises a carrier having a first major surface, an opposite second major surface and an aperture provided therein.

### OBJECT OF THE INVENTION

It is an object of the present invention to overcome or at least alleviate one or more of the abovementioned problems with furring channel support frameworks and/or provide the consumer with a useful or commercial choice.

### SUMMARY OF THE INVENTION

The above object is achieved by the clip according to claim 1.

Preferably, the body portion is substantially planar. Preferably the body portion is substantially rectangular in shape. Preferably the body portion has two opposed sides and two opposed ends.

Preferably the body portion includes an aperture. The aperture is preferably adapted to receive a fastener such as a bolt or a screw. Preferably the aperture is adapted to receive a grommet. More preferably the aperture is adapted to receive a grommet and a ferrule. Preferably the grommet and/or ferrule prevent direct contact between the body portion of the clip and the fastener.

Preferably each connection portion extends at substantially 90° from the body portion. Preferably each connection portion extends from a respective one of the two opposed sides of the body portion. Preferably the two connection portions are opposed to one another. Preferably the two opposed connection portions extend from the two opposed sides of the body portion. Preferably each of the at least one connection portion is substantially planar.

Preferably each of the two opposed connection positions are defined by two opposed notches. Preferably the opposed notches are adapted to retain therein lips of a furring channel. Preferably each of the two opposed connection positions is located between 2mm to 45mm away from the body portion of the clip. More preferably, each of the two opposed connection positions is located between 5mm to 30mm away from the body portion of the clip. In one embodiment, each of the two opposed connection positions is located substantially 10mm away from the body portion of the clip. In another embodiment, each of the two opposed connection positions is located substantially 15mm away from the body portion of the clip. In a further embodiment, each of the two opposed connection positions is located substantially 20mm away from the body portion of the clip. In yet another embodiment, each of the two opposed connection positions is located substantially 25mm away from the body portion of the clip.

Preferably each leg portion extends at substantially 90° from the body portion. Each leg portion extends from the body portion in a direction substantially opposite to the direction each connection portion extends from the body portion. Preferably each of the at least one leg portion extends from a respective one of the two opposed ends of the body portion. Preferably the two leg portions are opposed to one another. Preferably the two opposed leg portions extend from the two opposed ends of the body portion. Preferably each of the at least one leg portion are substantially rectangular in shape. Preferably each of the at least one leg portion is substantially planar.

Preferably each leg portion has a length between the body portion and a corresponding foot portion of between 5mm to 35mm. More preferably each leg portion has a length between the body portion and a corresponding foot portion of between 10mm to 25mm. In one embodiment, each leg portion has a length between the body portion and a corresponding foot portion of substantially 10mm. In another embodiment, each leg portion has a length between the body portion and a corresponding foot portion of substantially 15mm. In a further embodiment, each leg portion has a length between the body portion and a corresponding foot portion of substantially 25mm.

Preferably each foot portion extends at substantially 90° from the corresponding one of the at least one leg portion. Preferably each foot portion extends in a direction substantially parallel to the body portion. There are two leg portions and there are two foot portions, each of the foot portions extending from a corresponding one of the two leg portions. Each of the two foot portions extend towards each other. Preferably each foot portion is substantially planar. Preferably each foot portion includes rounded edges. More preferably each foot portion includes two rounded edges.

Preferably the clip is made from metal. Preferably the metal is bent or pressed into the shape of the clip. Preferably the metal is steel. Preferably the thickness of the metal is in the range of 0.5mm to 1.5mm. More preferably the thickness of the metal is substantially 1mm.

In another aspect, the present invention broadly resides in a clip assembly for mounting a furring channel to a support as defined in claim 2.

The insulation member preferably includes elastic material to inhibit or reduce vibrations from passing therethrough. The insulation member preferably includes resilient material to inhibit or reduce vibrations from passing therethrough. The insulation member preferably includes a rubber or plastic material to inhibit or reduce vibrations from passing therethrough. More preferably the insulation member includes a rubber material to inhibit or reduce vibrations from passing therethrough.

In one embodiment, the insulation member is made by extrusion. In another embodiment, the insulation member is made by moulding or casting.

The insulation member preferably has a bed portion adapted to at least cover a portion of the outer surface of the body portion. The outer surface of the body portion preferably faces in the same direction that the at least one connection portion extends from the body portion. The bed portion is preferably substantially rectangular in shape. Preferably the bed portion includes an aperture. Preferably, the aperture of the bed portion aligns with the aperture of the body portion of the clip in use. The bed portion is preferably substantially planar. The bed portion is preferably substantially rectangular in shape.

Preferably the insulation member includes a grommet extending from the bed portion. Preferably an aperture in the grommet defines the aperture in the bed portion. Preferably the grommet is adapted to be at least partially inserted into the aperture of the body portion. In another embodiment, the clip assembly includes a grommet adapted to be at least partially inserted into the aperture of the body portion.

The grommet preferably includes elastic material to inhibit or reduce vibrations from passing therethrough. The grommet preferably includes resilient material to inhibit or reduce vibrations from passing therethrough. The grommet preferably includes a rubber or plastic material to inhibit or reduce vibrations from passing therethrough. More preferably the grommet includes a rubber material to inhibit or reduce vibrations from passing therethrough.

The insulation member preferably has one or more flank portions adapted to at least cover a portion of the outer surface of the at least one leg portion. The one or more flank portions preferably extend from the bed portion. The one or more flank portions preferably extend at substantially 90° from the bed portion. If the clip has a single leg portion, the insulation member preferably has a single flank portion. If the clip has two leg portions, the insulation member preferably has two flank portions. Preferably the clip has two leg portions and the insulation member has two flank portions. The flank portions are preferably substantially planar. The flank portions are preferably substantially rectangular in shape.

The insulation member preferably has a support portion adapted to at least cover a portion of the outer surface of a corresponding foot portion of the clip. Each support portion preferably extends from a corresponding one of the flank portions. Each support portion preferably extends at substantially 90° from the corresponding flank portion. The insulation member preferably has two flank portions and a support portion extends from each of the two flank portions. Each support portion is preferably substantially planar. Each support portion is preferably substantially rectangular in shape.

Preferably in use, when the body portion of the clip is attached relative to the support structure, each support portion is located between a corresponding foot portion and the support structure.

In one embodiment, each support portion has a plurality of projections extending therefrom. Preferably in use, the plurality of projections extend in a direction away from the clip. Preferably the plurality of projections provide additional insulation between the clip and the support member. In one embodiment, the plurality of projections are ribs. Preferably the ribs are parallel to one another. In another embodiment, the plurality of projections are knobs, nibs or lugs.

Preferably each support portion has a skirt portion. Preferably each skirt portion is adapted to attach to an end of the corresponding foot portion of the clip to hold the insulation member in place on the clip. More preferably each skirt portion is adapted to straddle an end of the corresponding foot portion of the clip to hold the insulation member in place on the clip.

The clip assembly preferably includes a ferrule. The ferrule is preferably adapted to be inserted into the aperture of the body portion. The ferrule preferably includes a rim portion adapted to prevent the ferrule from passing all the way through the aperture in the body portion. The ferrule is preferably adapted to be inserted into the aperture of the grommet. The ferrule is preferably adapted to accept a fastener to fasten the clip assembly to a support structure. In use the ferrule preferably extends at least between the body portion and the support structure. Preferably the ferrule prevents the fastener from damaging the clip if the fastener is overtightened.

In a further aspect, the present invention broadly resides in an assembly according to claim 13 comprising an insulation member.

Preferably each of the at least two opposed connection positions are defined by at least two opposed notches. Preferably the opposed notches are adapted to retain therein lips of a furring channel. Preferably each of the at least two opposed connection positions is located between 10mm to 60mm away from the body portion of the clip. More preferably, each of the at least two opposed connection positions is located between 10mm to 45mm away from the body portion of the clip.

Preferably the at least two opposed connection positions are a plurality of two opposed connection portions. In one embodiment, each of the at least one connection portion includes two sets of two opposed connection positions. In another embodiment, each of the at least one connection portion includes three sets of two opposed connection positions. In a further embodiment, each of the at least one connection portion includes four sets of two opposed connection positions. In an additional embodiment, each of the at least one connection portion includes five sets of two opposed connection positions.

In one embodiment, the lower of each of the at least two opposed connection positions is located substantially 10mm away from the body portion of the clip. In another embodiment, the lower of each of the at least two opposed connection positions is located substantially 15mm away from the body portion of the clip. In a further embodiment, the lower of each of the at least two opposed connection positions is located substantially 20mm away from the body portion of the clip. In yet another embodiment, the lower of each of the at least two opposed connection positions is located substantially 25mm away from the body portion of the clip. In one embodiment, the lower of each of the at least two opposed connection positions is located substantially 30mm away from the body portion of the clip. In another embodiment, the lower of each of the at least two opposed connection positions is located substantially 35mm away from the body portion of the clip. In a further embodiment, the lower of each of the at least two opposed connection positions is located substantially 40mm away from the body portion of the clip. In yet another embodiment, the lower of each of the at least two opposed connection positions is located substantially 45mm away from the body portion of the clip.

Preferably each of the at least two opposed connection positions is located between 20mm to 70mm away from the corresponding foot portion of the clip. More preferably, each of the at least two opposed connection positions is located between 20mm to 55mm away from the corresponding foot portion of the clip.

In one embodiment, the lower of each of the at least two opposed connection positions is located substantially 20mm away from the corresponding foot portion of the clip. In another embodiment, the lower of each of the at least two opposed connection positions is located substantially 25mm away from the corresponding foot portion of the clip. In a further embodiment, the lower of each of the at least two opposed connection positions is located substantially 30mm away from the corresponding foot portion of the clip. In yet another embodiment, the lower of each of the at least two opposed connection positions is located substantially 35mm away from the corresponding foot portion of the clip. In one embodiment, the lower of each of the at least two opposed connection positions is located substantially 40mm away from the corresponding foot portion of the clip. In another embodiment, the lower of each of the at least two opposed connection positions is located substantially 45mm away from the corresponding foot portion of the clip. In a further embodiment, the lower of each of the at least two opposed connection positions is located substantially 50mm away from the corresponding foot portion of the clip. In yet another embodiment, the lower of each of the at least two opposed connection positions is located substantially 55mm away from the corresponding foot portion of the clip.

In one embodiment, the upper of each of the at least two opposed connection positions is located substantially 10mm away from the body portion of the clip. In another embodiment, the upper of each of the at least two opposed connection positions is located substantially 15mm away from the body portion of the clip. In a further embodiment, the upper of each of the at least two opposed connection positions is located substantially 20mm away from the body portion of the clip. In yet another embodiment, the upper of each of the at least two opposed connection positions is located substantially 25mm away from the body portion of the clip. In one embodiment, the upper of each of the at least two opposed connection positions is located substantially 30mm away from the body portion of the clip. In another embodiment, the upper of each of the at least two opposed connection positions is located substantially 35mm away from the body portion of the clip. In a further embodiment, the upper of each of the at least two opposed connection positions is located substantially 40mm away from the body portion of the clip. In yet another embodiment, the upper of each of the at least two opposed connection positions is located substantially 45mm away from the body portion of the clip.

In one embodiment, the upper of each of the at least two opposed connection positions is located substantially 20mm away from the corresponding foot portion of the clip. In another embodiment, the upper of each of the at least two opposed connection positions is located substantially 25mm away from the corresponding foot portion of the clip. In a further embodiment, the upper of each of the at least two opposed connection positions is located substantially 30mm away from the corresponding foot portion of the clip. In yet another embodiment, the upper of each of the at least two opposed connection positions is located substantially 35mm away from the corresponding foot portion of the clip. In one embodiment, the upper of each of the at least two opposed connection positions is located substantially 40mm away from the corresponding foot portion of the clip. In another embodiment, the upper of each of the at least two opposed connection positions is located substantially 45mm away from the corresponding foot portion of the clip. In a further embodiment, the upper of each of the at least two opposed connection positions is located substantially 50mm away from the corresponding foot portion of the clip. In yet another embodiment, the upper of each of the at least two opposed connection positions is located substantially 55mm away from the corresponding foot portion of the clip.

Preferably each foot portion is spaced substantially 10mm from the body portion.

### BRIEF DESCRIPTION OF THE DRAWINGS

In order that the present invention can be more readily understood reference will now be made to the accompanying drawings which illustrate a preferred embodiment of the invention and wherein:
Figure 1 is a perspective view of a clip assembly according to an embodiment of the present invention;
Figure 2 is a top perspective view of the clip assembly of Figure 1;
Figure 3 is a side view of the clip assembly of Figure 1;
Figure 4 is a top view of the clip assembly of Figure 1;
Figure 5 is a bottom view of the clip assembly of Figure 1;
Figure 6 is an exploded view of the clip assembly of Figure 1;
Figure 7 is a perspective view of the clip of the clip assembly of Figure 1;
Figure 8 is a top perspective view of the clip of the clip assembly of Figure 1;
Figure 9 is a side view of the clip of the clip assembly of Figure 1;
Figure 10 is a side view of a clip according to another embodiment of the present invention;
Figure 11 is a side view of a clip according to a further embodiment of the present invention;
Figure 12 is a top view of the clip of the clip assembly of Figure 1 prior to being bent into shape;
Figure 13 is a perspective bottom view of the insulation of the clip assembly of Figure 1;
Figure 14 is a perspective top view of the insulation of the clip assembly of Figure 1;
Figure 15 is a side view of the insulation of the clip assembly of Figure 1;
Figure 16 is a side view of a clip according to an embodiment of the present invention;
Figure 17 is a side view of a clip according to a second embodiment of the present invention;
Figure 18 is a side view of a clip according to a third embodiment of the present invention;
Figure 19 is a side view of a clip according to a fourth embodiment of the present invention;
Figure 20 is a side view of a clip according to a fifth embodiment of the present invention;
Figure 21 is a side view of a clip according to a sixth embodiment of the present invention; and
Figure 22 is a top view of the clip of Figure 21 prior to being bent into shape.

### DETAILED DESCRIPTION OF THE PREFERRED EMBODIMENT

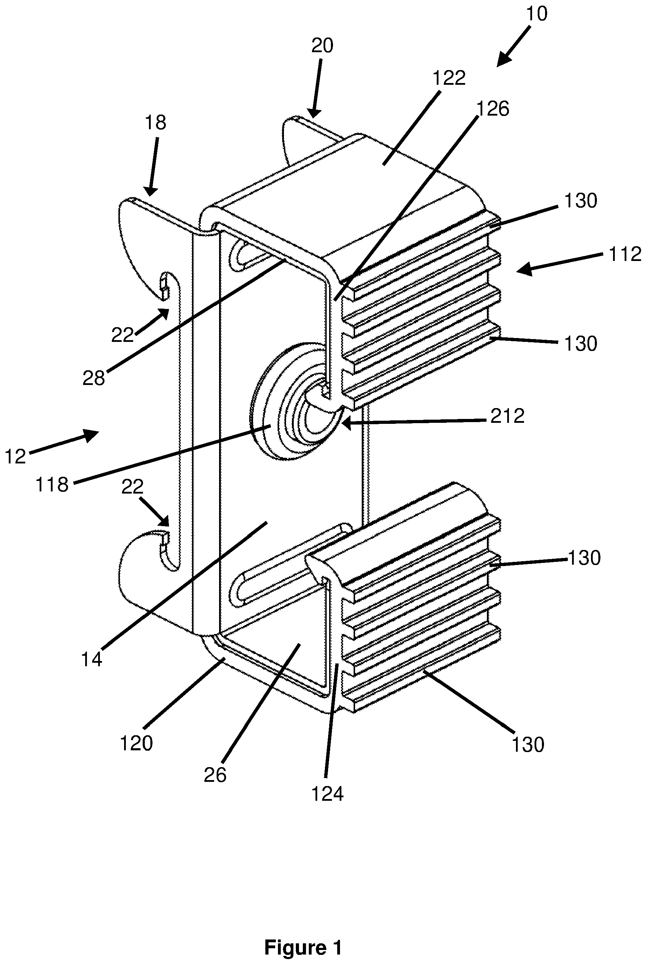

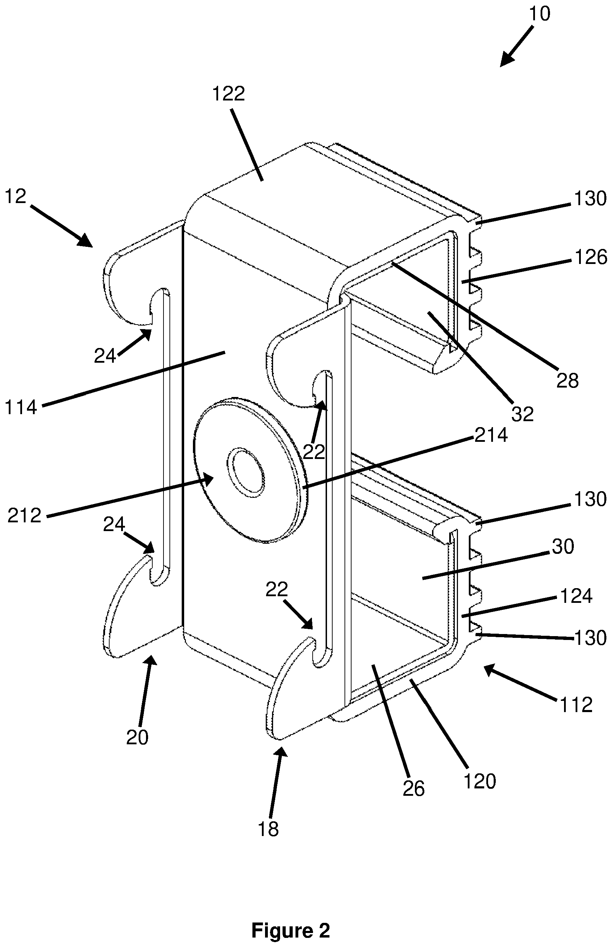

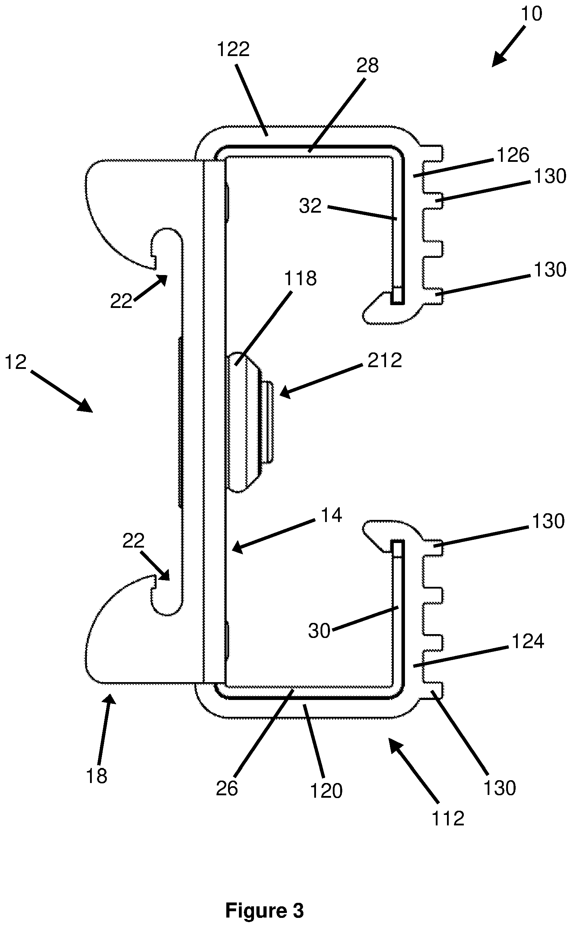

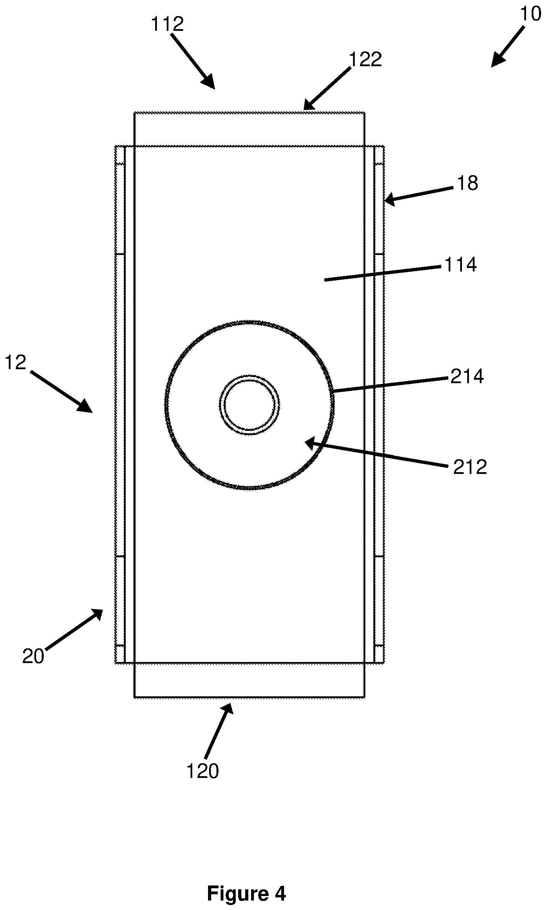

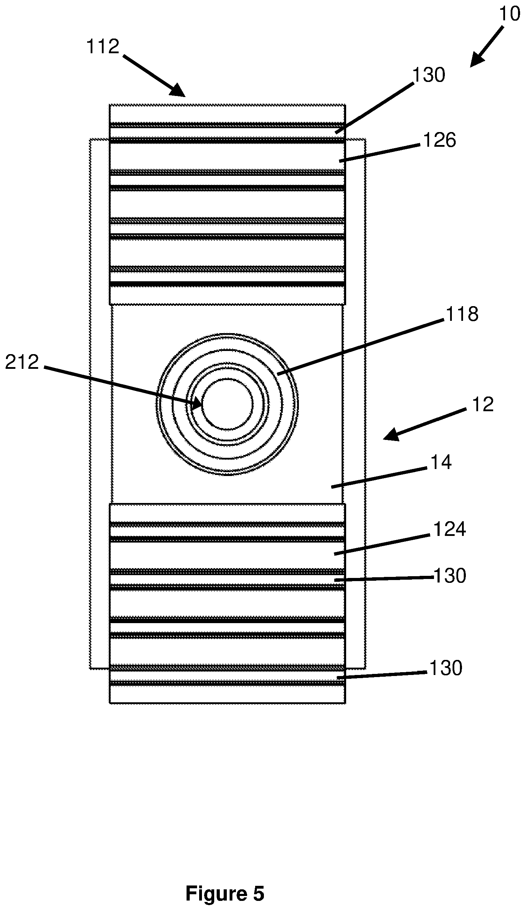

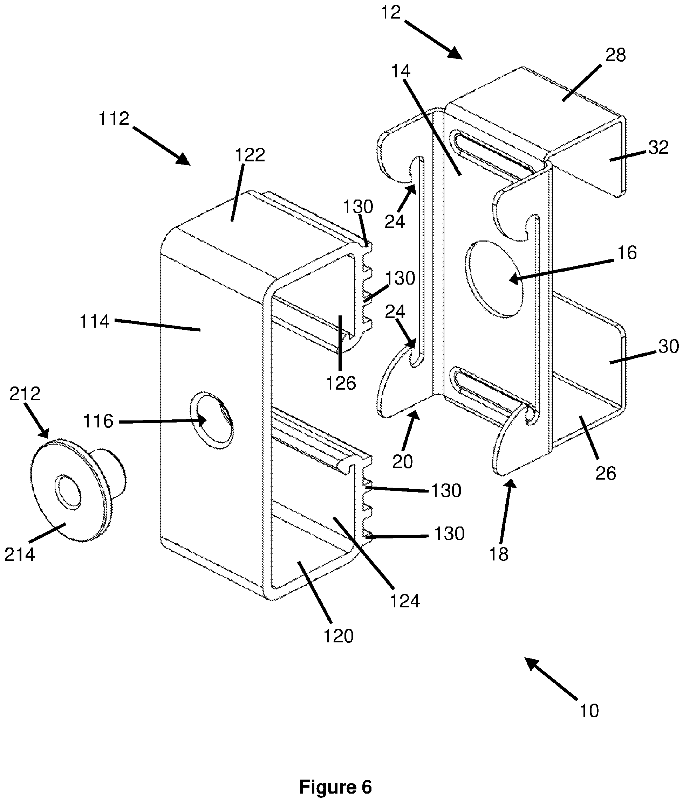

With reference to Figures 1 to 6, there is shown a clip assembly 10 according to an embodiment of the present invention. The clip assembly 10 includes a clip 12. The clip assembly includes an insulation member 112 to partially cover the clip. The clip assembly 10 includes a ferrule 212.

The clip 12 has a body portion 14. The body portion 14 is planar and substantially rectangular. The body portion has an aperture 16 located therethrough. The aperture 16 is adapted to attach the clip assembly 10 to a support structure (not shown) via a fastener (not shown) as will be explained in more detail below.

Two opposed connection portions 18,20 extend at 90° from sides of the body portion 14. Each of the two connection portions 18,20 has two opposed connection positions in the form of recesses 22,24. The recesses 22,24 are adapted to connect to a furring channel (not shown).

Two opposed leg portions 26,28 extend at 90° from ends of the body portion 14.

A foot portion 30,32 extends at 90° from each of the two leg portions 26,28. The foot portions 30,32 are substantially parallel to the body portion 14.

The insulation member 112 is made from rubber to inhibit vibrations from passing therethrough.

The insulation member 112 has a bed portion 114. The bed portion 114 is adapted to at least cover a portion of the outer surface of the body portion 14 of the clip 12. The bed portion 114 includes an aperture 116.

Preferably the insulation member 112 includes a grommet 118 extending from the bed portion 114. The aperture 16 extends through the grommet 118. In use, the grommet 118 is adapted to be at least partially inserted into the aperture 16 of the body portion 14 of the clip 12.

The insulation member 112 has two flank portions 120,122 adapted to at least cover a portion of the outer surface of the corresponding leg portions 26,28.

The insulation member 112 has support portions 124,126. The support portions 124,126 extend from the flank portions 120,122 and are adapted to at least cover a portion of the outer surface of a corresponding foot portion 30,32 of the clip 12.

Each support portion 124,126 has a plurality of projections in the form of ribs 130 extending therefrom.

Each support portion 124,126 has a corresponding skirt portion 132,134. Each skirt portion 132,134 is adapted to attach to an end of the corresponding foot portion of the clip to hold the insulation member in place on the clip.

In use, when the body portion 14 of the clip is attached relative to a support structure (not shown), each support portion 124,126 is located between a corresponding foot portion 30,32 and the support structure, inhibit vibration from traveling from the support structure through the clip 12 into the furring channel and into wall or ceiling cladding (not shown) attached to the furring channel.

The ferrule 212 is adapted to be inserted into the aperture 16. The ferrule 212 includes a rim portion 214 adapted to prevent the ferrule from passing all the way through apertures 16,116. The ferrule 212 is adapted to accept a fastener such as a screw to fasten the clip assembly 10 to a support structure (not shown). In one embodiment (not shown) the ferrule extends at least between the body portion and the support structure to prevent a fastener (not shown) from damaging the clip if the fastener is overtightened.

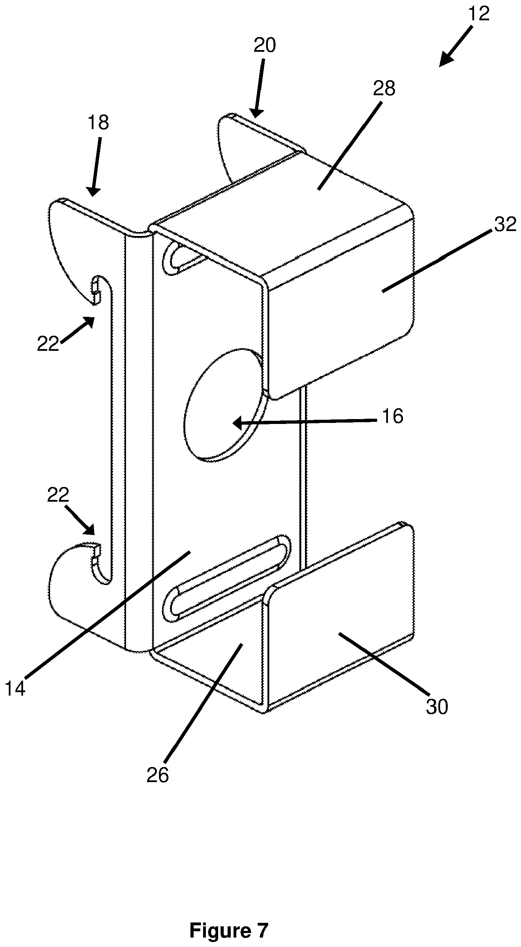

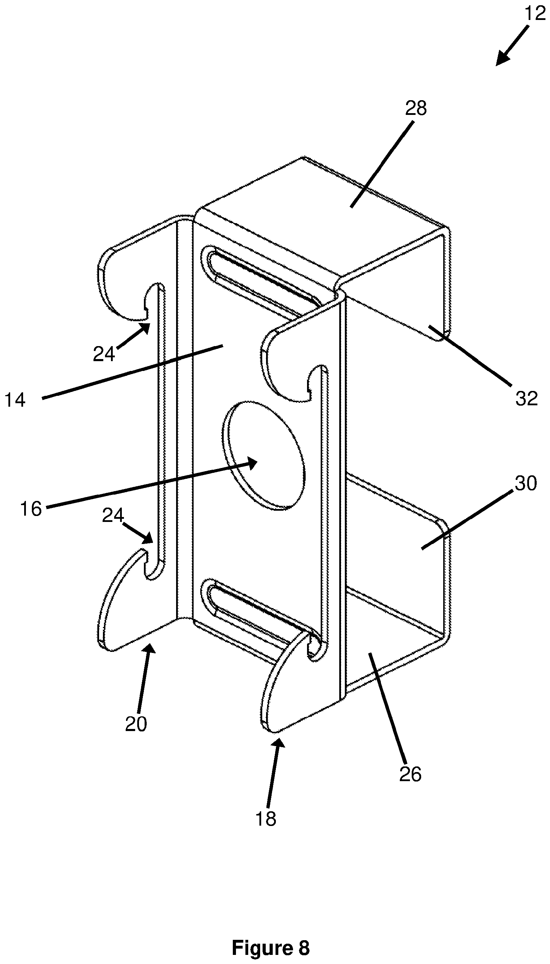

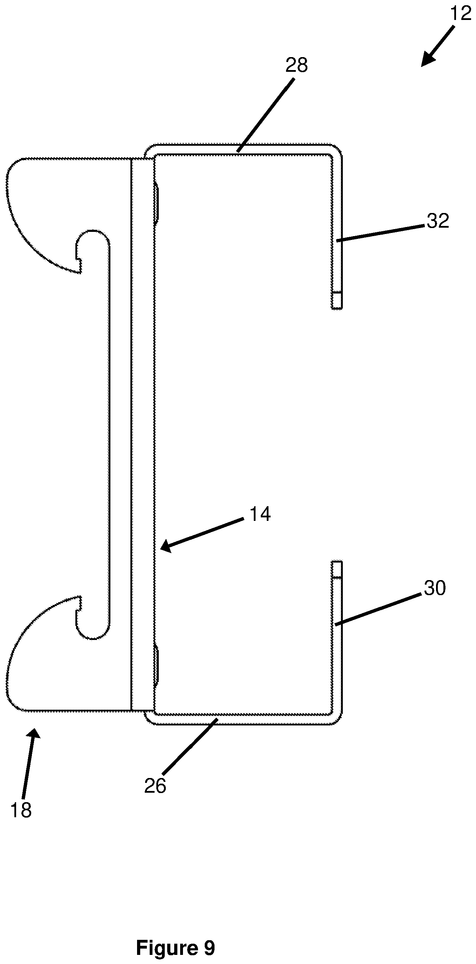

With reference to Figures 7 to 9, there is shown the clip 12 of the clip assembly 10 of Figures 1 to 6 in more detail. The two opposed leg portions 26,28 have a length of 25mm between the body portion 14 and the corresponding foot portion 30,32

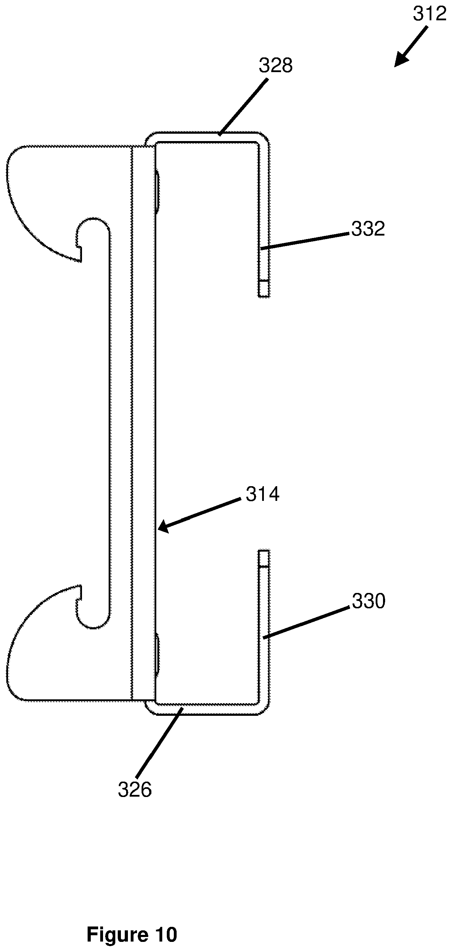

With reference to Figure 10, there is shown a clip 312 according to another embodiment of the invention. The two opposed leg portions 326,328 have a length of 15mm between the body portion 314 and the corresponding foot portion 330,332.

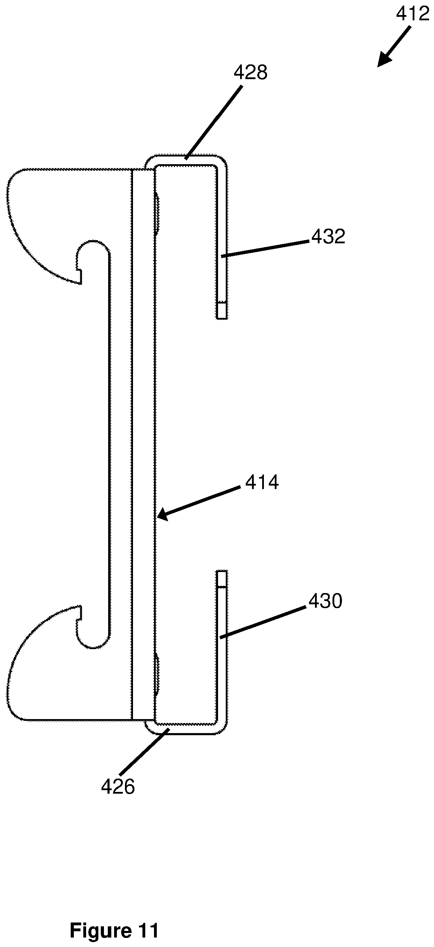

With reference to Figure 11, there is shown a clip 412 according to a further embodiment of the invention. The two opposed leg portions 426,428 have a length of 10mm between the body portion 414 and the corresponding foot portion 430,432.

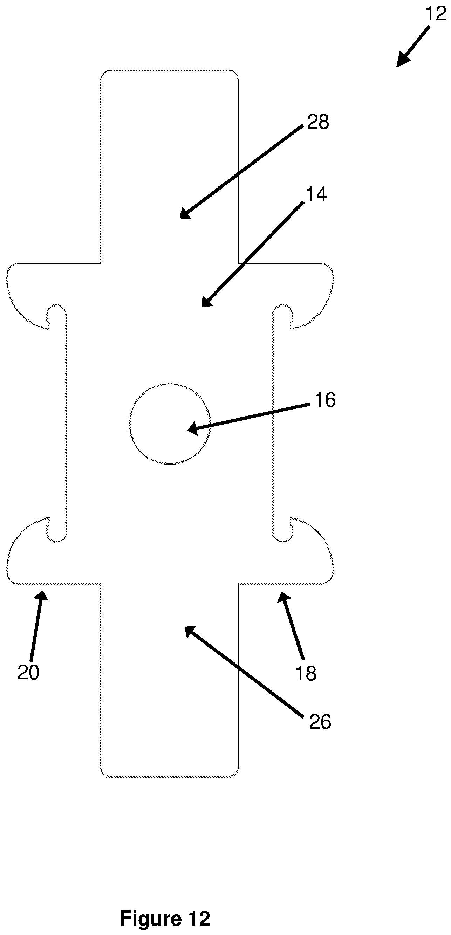

With reference to Figure 12, there is shown the clip 12 of Figures 7 to 9 prior to being bent into shape. The clip 12 is a single piece that is punched out of sheet metal before being bent into shape.

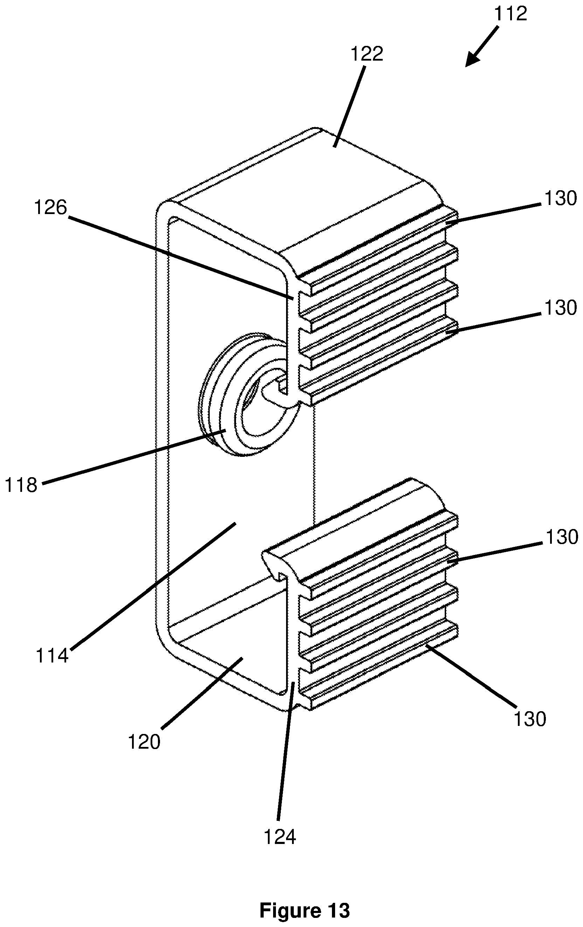

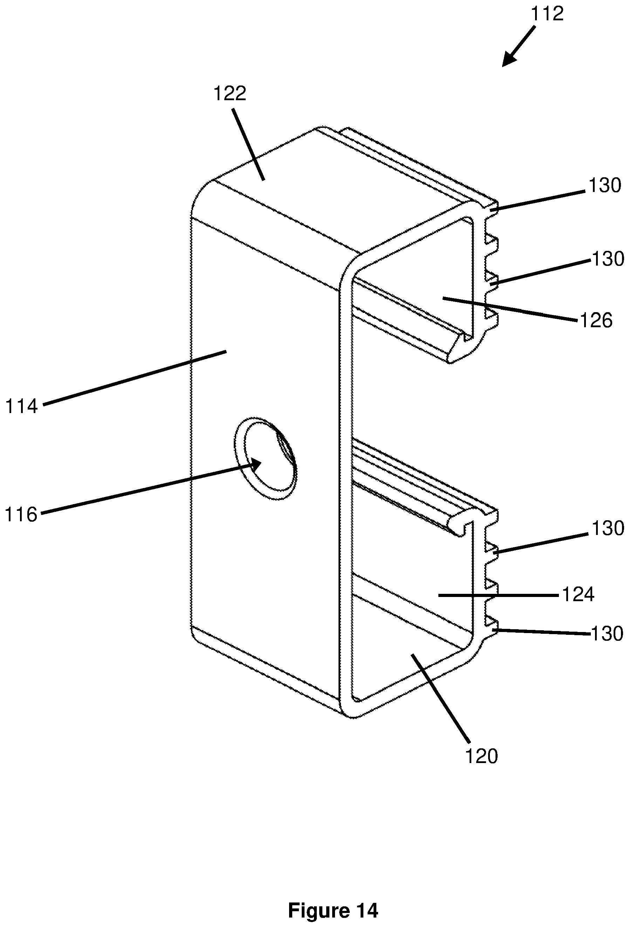

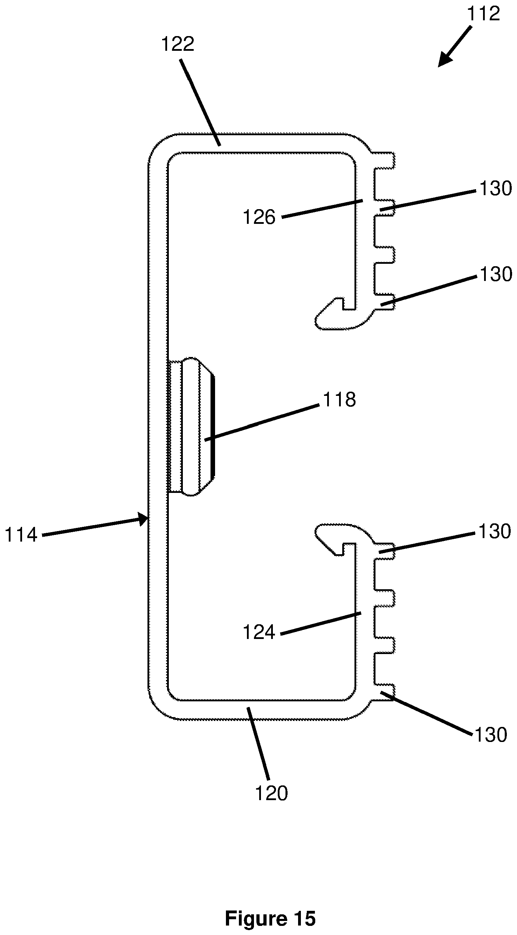

With reference to Figures 13 to 15, there is shown the insulation member 112 of the clip assembly 10 of Figures 1 to 6 in more detail.

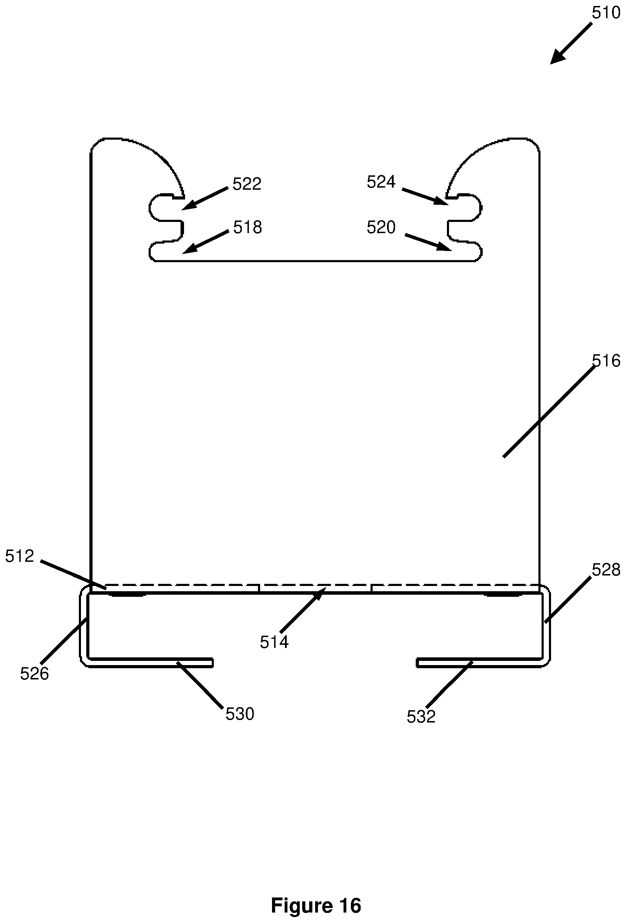

With reference to Figure 16, there is shown a clip 510 according to an embodiment of the present invention.

The clip 510 has a body portion 512 (shown in dotted line). The body portion 512 is planar and substantially rectangular. The body portion has an aperture 514 located therethrough. The aperture 514 is adapted to attach the clip 510 to a support structure (not shown) via a fastener (not shown).

The clip 510 has two opposed connection portions 516 (only one side shown) that extend at 90° from sides of the body portion 512. Each of the two connection portions 516 has two sets of two opposed connection positions in the form of recesses 518,520,522,524 (only recesses of one side shown). The recesses 518,520,522,524 are adapted to connect to a furring channel (not shown).

Two opposed leg portions 526,528 extend at 90° from ends of the body portion 512.

A foot portion 530,532 extends at 90° from each of the two leg portions 526,528. The foot portions 530,532 are substantially parallel to the body portion 512.

Each leg portion 526,528 extends substantially 10mm from the body portion 512 to space each foot portion substantially 10mm from the body portion 512.

The lower set of recesses 518,520 are spaced at substantially 40mm from the body portion, and at substantially 50mm from corresponding foot portions 530,532.

The upper set of recesses 522,524 are spaced at substantially 45mm from the body portion, and at substantially 55mm from corresponding foot portions 530,532.

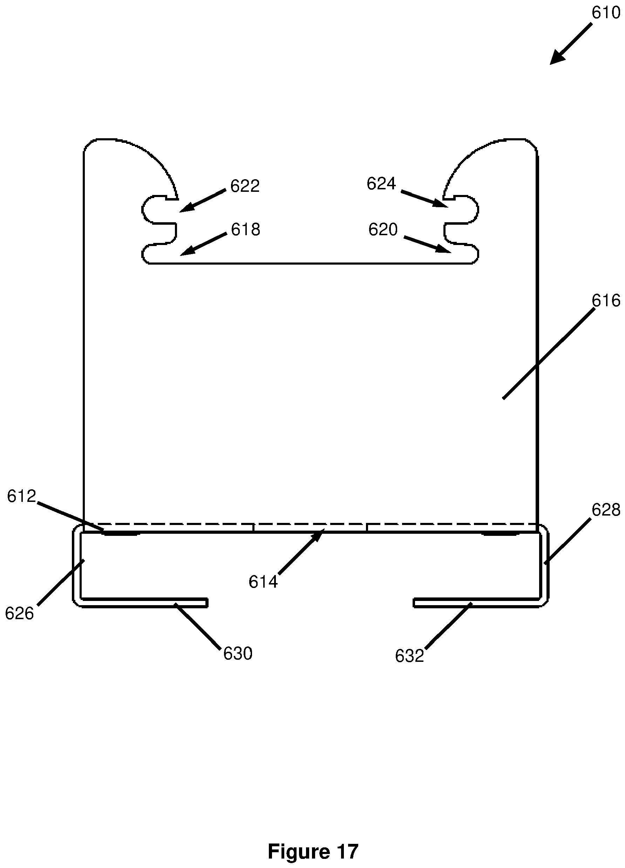

With reference to Figure 17, there is shown a clip 610 according to a second embodiment of the invention. The clip 610 is similar to the clip 510 in Figure 16.

The clip 610 has a body portion 612 (shown in dotted line), an aperture 614, two opposed connection portions 616 (only one side shown), two sets of two opposed connection positions in the form of recesses 618,620,622,624 (only recesses of one side shown), two opposed leg portions 626,628, and foot portions 630,632.

Each leg portion 626,628 extends substantially 10mm from the body portion 612 to space each foot portion substantially 10mm from the body portion 612.

The lower set of recesses 618,620 are spaced at substantially 30mm from the body portion 612, and at substantially 40mm from corresponding foot portions 630,632.

The upper set of recesses 622,624 are spaced at substantially 35mm from the body portion 612, and at substantially 45mm from corresponding foot portions 630,632.

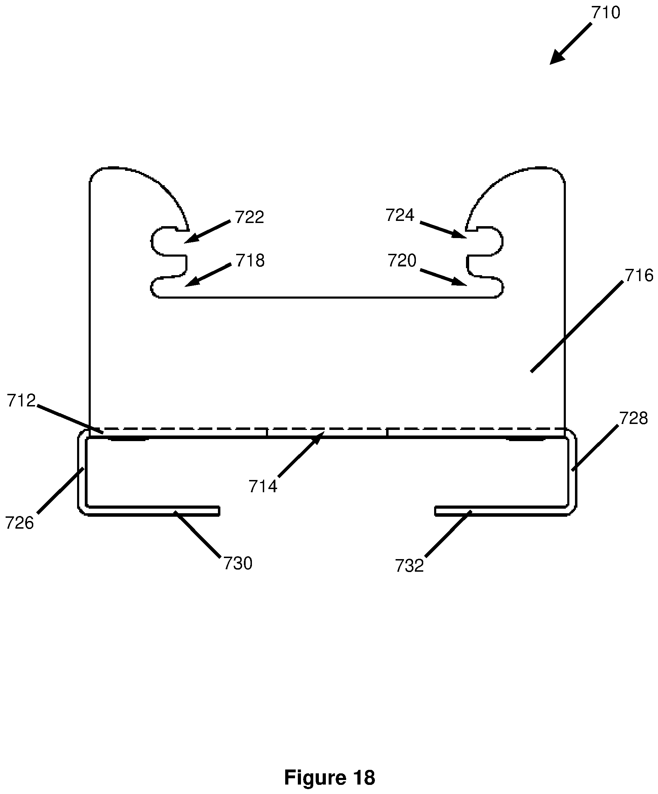

With reference to Figure 18, there is shown a clip 710 according to a third embodiment of the invention. The clip 710 is similar to the clip 510 in Figure 16.

The clip 710 has a body portion 712 (shown in dotted line), an aperture 714, two opposed connection portions 716 (only one side shown), two sets of two opposed connection positions in the form of recesses 718,720,722,724 (only recesses of one side shown), two opposed leg portions 726,728, and foot portions 730,732.

Each leg portion 726,728 extends substantially 10mm from the body portion 712 to space each foot portion substantially 10mm from the body portion 712.

The lower set of recesses 718,720 are spaced at substantially 15mm from the body portion 712, and at substantially 25mm from corresponding foot portions 730,732.

The upper set of recesses 722,724 are spaced at substantially 20mm from the body portion 712, and at substantially 30mm from corresponding foot portions 730,732.

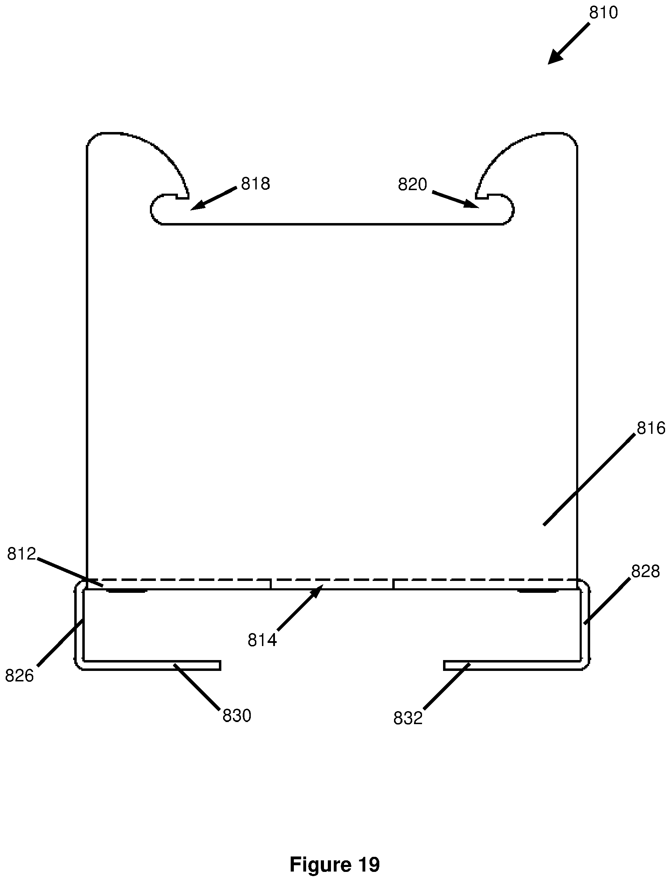

With reference to Figure 19, there is shown a clip 810 according to a fourth embodiment of the invention. The clip 810 is similar to the clip 510 in Figure 16, apart from the number of notches and size.

The clip 810 has a body portion 812 (shown in dotted line), an aperture 814, two opposed connection portions 816 (only one side shown), two opposed connection positions in the form of recesses 818,820, (only recesses of one side shown), two opposed leg portions 826,828, and foot portions 830,832.

Each leg portion 826,828 extends substantially 10mm from the body portion 812 to space each foot portion substantially 10mm from the body portion 812.

The recesses 818,820 are spaced at substantially 40mm from the body portion 812, and at substantially 50mm from corresponding foot portions 830,832.

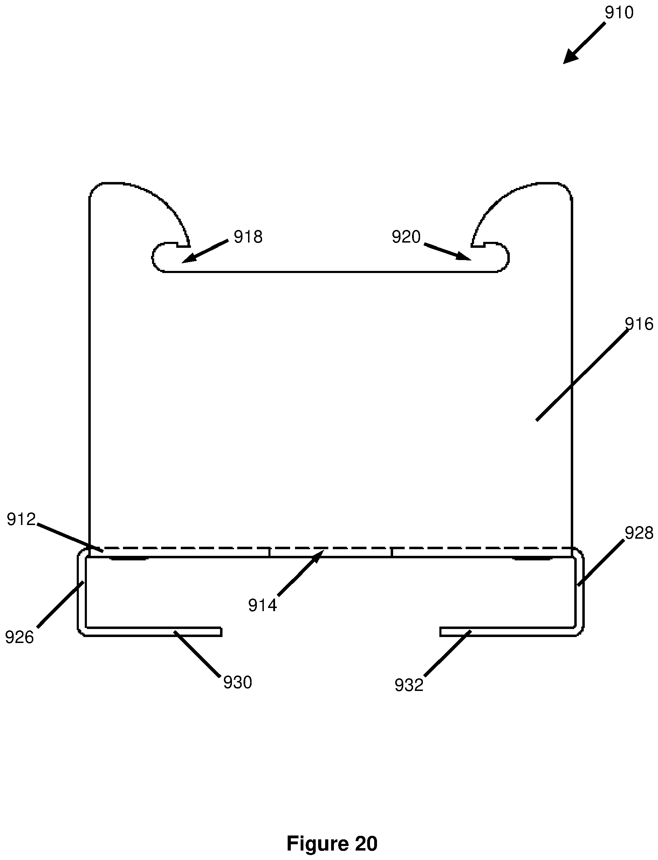

With reference to Figure 20, there is shown a clip 910 according to a fifth embodiment of the invention. The clip 910 is similar to the clip 810 in Figure 19.

The clip 910 has a body portion 912 (shown in dotted line), an aperture 914, two opposed connection portions 916 (only one side shown), two opposed connection positions in the form of recesses 918,920, (only recesses of one side shown), two opposed leg portions 926,928, and foot portions 930,932.

Each leg portion 926,928 extends substantially 10mm from the body portion 912 to space each foot portion substantially 10mm from the body portion 912.

The recesses 918,920 are spaced at substantially 32mm from the body portion 912, and at substantially 42mm from corresponding foot portions 930,932.

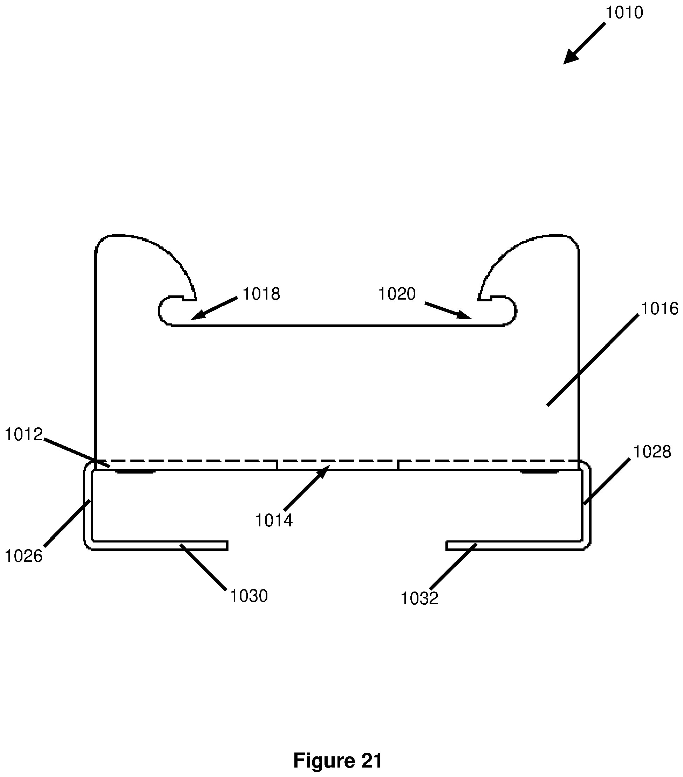

With reference to Figure 21, there is shown a clip 1010 according to a sixth embodiment of the invention. The clip 1010 is similar to the clip 810 in Figure 19.

The clip 1010 has a body portion 1012 (shown in dotted line), an aperture 1014, two opposed connection portions 1016 (only one side shown), two opposed connection positions in the form of recesses 1018,1020, (only recesses of one side shown), two opposed leg portions 1026,1028, and foot portions 1030,1032.

Each leg portion 1026,1028 extends substantially 10mm from the body portion 1012 to space each foot portion substantially 10mm from the body portion 1012.

The recesses 1018,1020 are spaced at substantially 15mm from the body portion 1012, and at substantially 25mm from corresponding foot portions 1030,1032.

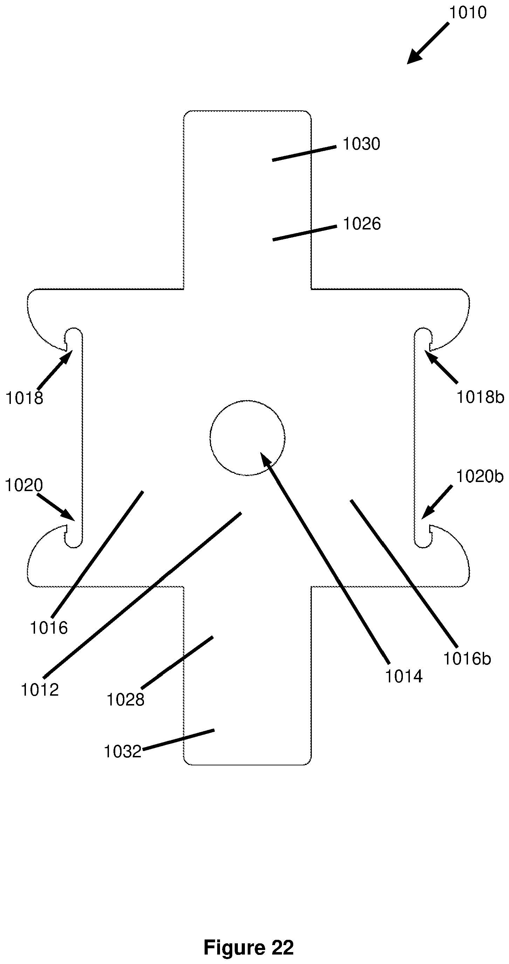

With reference to Figure 22, there is shown the clip 1010 of Figure 21 prior to being bent into shape. The clip 1010 is a single piece that is punched out of sheet metal before being bent into shape. Figure 22 shows the second connection portion 1016b and corresponding recesses 1018b, 1020b.

### ADVANTAGES

An advantage of the preferred embodiment of the clip includes the ability to further distance a furring channel from a support structure. Another advantage of the preferred embodiment of the clip assembly includes the ability to inhibit vibrations from traveling from a support structure to a furring channel. A further advantage of the preferred embodiment of the clip assembly includes preventing direct contact between the clip and a fastener securing the clip to a support structure. Another advantage of the preferred embodiment of the clip includes the ability to vary the distance between the furring channel and the support structure.

Throughout the description and claims of this specification the word "comprise" and variations of that word such as "comprises" and "comprising", are not intended to exclude other additives, components, integers or steps.

## Claims

1. A clip (12) for mounting a furring channel to a support structure, the clip (12) having
a body portion (14) attachable relative to the support structure; and
two connection portions (18,20) connected to and extending transversely from the body portion (14), each of the connection portions (18,20) has at least two opposed connection positions (22,24) adapted to connect to the furring channel;
**characterised in that** the clip (12) has
two leg portions (26,28) extending transversely from the body portion (14) away from the connection portions (18,20); and
each leg portion (26,28) has a foot portion (30,32), each foot portion (30,32) extending transversely from respective leg portions (26,28), each foot portion (30,32) extending towards each other in the same plane; wherein in use, when the body portion (14) is attached relative to the support structure, each foot portion (30,32) is proximal to the support structure and each of the at least one connection portion (18,20) is distal to the support structure.

2. A clip assembly (10) for mounting a furring channel to a support structure, the clip assembly (10) having
a clip (12) as claimed in claim 1; and
an insulation member (112) adapted to at least cover a portion of an outer surface of the body portion (14), a portion of an outer surface of each of the at least one leg portion (26,28) and a portion of an outer surface of each foot portion (30,32);
wherein in use, when the body portion (14) is attached relative to the support structure, a portion of the insulation member (112) is located between each foot portion (30,32) and the support structure.

3. A clip assembly (10) as claimed in claim 2, wherein the insulation member (112) has a bed portion (114) adapted to at least cover a portion of the outer surface of the body portion (14) of the clip (12), one or more flank portions (120,122) extending from the bed portion (114), each of the one or more flank portions (120,122) adapted to at least cover a portion of the outer surface of a corresponding one of the at least one leg portion (26,28), and a support portion (124,126) extending from each of the one or more flank portions (120,122), each support portion (124,126) adapted to at least cover a portion of the outer surface of a corresponding foot portion (30,32) of the clip (12).

4. A clip assembly (10) as claimed in claim 2 or claim 3, wherein the clip (12) is made from pressed metal, and wherein the body portion (14) includes an aperture (16) adapted to receive a fastener such as a bolt or a screw, and further including a grommet and a ferrule adapted to be inserted into the aperture (16), wherein the grommet and/or ferrule prevent direct contact between the body portion (14) of the clip and the fastener.

5. A clip (12) or clip assembly (10) as claimed in any one of the preceding claims, wherein each connection portion (18,20) extends at substantially 90° from the body portion (14), and wherein the body portion (14) is substantially rectangular in shape and has two opposed sides and two opposed ends, and each connection portion (18,20) extends from a respective one of the two opposed sides of the body portion (14), and the two connection portions (22,24) are opposed to one another, and wherein each leg portion (26,28) extends at substantially 90° from the body portion (14), and each foot portion (30,32) extends at substantially 90° from the corresponding leg portion (26,28) and substantially parallel to the body portion (14).

6. A clip assembly (10) as claimed in claim 3, wherein each support portion (124,126) has a plurality of projections (130) extending therefrom.

7. A clip assembly (10) as claimed in claim 6, wherein the plurality of projections (130) are ribs.

8. A clip (12) as claimed in claim 1 for mounting a furring channel to a support structure, wherein
the at least two opposed connection positions (22,24) are spaced by at least 10mm from the body portion (14).

9. A clip (12) as claimed in claim 1 for mounting a furring channel to a support structure, wherein
the two connection portions are opposed connection portions (18,20), each of the connection portions (18,20) extending transversely from a side the body portion (14);
the two leg portions are opposed leg portions (26,28), each of the leg portions (26,28) extending transversely from an end of the body portion (14) in a direction away from the two connection portions (18,20);
each foot portion (30,32) is substantially parallel to the body portion (14); and
the two opposed connection positions (22,24) are each spaced at least 20mm from a corresponding one of the leg portions (26,28).

10. A clip (12) as claimed in claim 8 or claim 9, wherein the at least two opposed connection positions (22,24) are each spaced at least 25mm, 30mm, 35mm, 40mm, 45mm, 50mm, 55mm or 60mm from a corresponding one of the leg portions (26,28).

11. A clip (12) as claimed in any one of claims 8 to 10, wherein each of the connection portions (18,20) two sets of two opposed connection positions, three sets of two opposed connection positions, or four sets of two opposed connection positions.

12. A clip (12) as claimed in any one of claims 8 to 11, wherein each connection position (18,20) is defined by a notch or a recess.

13. An assembly comprising a clip (12) as claimed in claim 1 and an insulation member (112), the insulation member (112) having
a substantially planar bed portion (114) having two opposed ends;
two flank portions (120,122), each extending from an opposed end of the bed portion (114) at substantially 90° to the bed portion (114); and
a support portion (124,126) extends at substantially 90° from each of the flank portion (120,122), each of the support portions (124,126) including a plurality of projections (130) extending therefrom in a direction away from the bed portion (114).

## Patentansprüche

1. Clip (12) zum Befestigen eines Unterkonstruktionsprofils an einer Tragstruktur, wobei der Clip (12) aufweist:
einen Körperabschnitt (14), der bezüglich der Tragstruktur befestigbar ist, und
zwei Verbindungsabschnitte (18, 20), die verbunden sind mit und sich quer von dem Körperabschnitt (14) erstrecken, wobei jeder der Verbindungsabschnitte (18, 20) wenigstens zwei gegenüberliegende Verbindungspositionen (22, 24) aufweist, die zur Verbindung mit dem Unterkonstruktionsprofil ausgebildet sind,
**dadurch gekennzeichnet, dass** der Clip (12) aufweist:
zwei Schenkelabschnitte (26, 28), die sich quer von dem Körperabschnitt (14) weg von den Verbindungsabschnitten (18, 20) erstrecken, und
wobei jeder Schenkelabschnitt (26, 28) einen Fußabschnitt (30, 32) aufweist, wobei jeder Fußabschnitt (30, 32) sich quer von dem jeweiligen Schenkelabschnitt (26, 28) erstreckt, wobei sich jeder Fußabschnitt (30, 32) aufeinander zu in der gleichen Ebene erstreckt,
wobei in Gebrauch, wenn der Körperabschnitt (14) bezüglich der Tragstruktur befestigt ist, jeder Fußabschnitt (30, 32) sich nah der Tragstruktur befindet und jeder des wenigstens einen Verbindungsabschnitts (18, 20) sich entfernt von der Tragstruktur befindet.

2. Clip-Anordnung (10) zum Befestigen eines Unterkonstruktionsprofils an einer Tragstruktur, wobei die Clip-Anordnung (10) aufweist:
einen Clip (12) gemäß Anspruch 1 und
ein Isolierelement (112), das dazu ausgebildet ist, wenigstens einen Teil einer Außenfläche des Körperabschnitts (14), einen Teil einer Außenfläche jedes des wenigstens einen Schenkelabschnitts (26, 28) und einen Teil einer Außenfläche jedes Fußabschnitts (30, 32) abzudecken,
wobei in Gebrauch, wenn der Körperabschnitt (14) bezüglich der Tragstruktur befestigt ist, ein Teil des Isolierelements (112) zwischen jedem Fußabschnitt (30, 32) und der Tragstruktur angeordnet ist.

3. Clip-Anordnung (10) nach Anspruch 2, wobei das Isolierelement (112) einen Bettabschnitt (14) aufweist, der dazu ausgebildet ist, zumindest einen Teil der Außenfläche des Körperabschnitts des Clips (12) abzudecken, einen oder mehrere sich von dem Bettabschnitt (114) erstreckende Flankenabschnitte (120,122), wobei jeder des einen oder der mehreren Flankenabschnitte (120, 122) dazu ausgebildet ist, zumindest einen Teil der Außenfläche des entsprechenden wenigstens einen Schenkelabschnitts (26, 28) abzudecken, und einen Tragabschnitt (124, 126), der sich von jedem des einen oder der mehreren Flankenabschnitte (120, 122) erstreckt, wobei jeder Tragabschnitt (124, 126) dazu ausgebildet ist, wenigstens einen Teil der Außenfläche eines entsprechenden Fußabschnitts (30, 32) des Clips (12) abzudecken.

4. Clip-Anordnung (10) nach Anspruch 2 oder Anspruch 3, wobei der Clip (12) aus gepresstem Metall hergestellt ist und wobei der Körperabschnitt (14) eine Öffnung (16) aufweist, die dazu ausgebildet ist, ein Befestigungselement wie einen Bolzen oder eine Schraube aufzunehmen, und weiter eine Tülle und eine Hülse umfassend, die dazu ausgebildet sind, in die Öffnung (16) eingeführt zu werden, wobei die Tülle und/oder Hülse einen direkten Kontakt zwischen dem Körperabschnitt (14) des Clips (12) und dem Befestigungselement verhindern.

5. Clip (12) oder Clip-Anordnung (10) nach einem der vorhergehenden Ansprüche, wobei sich jeder Verbindungsabschnitt (18, 20) im Wesentlichen mit 90° vom Körperabschnitt (14) erstreckt und wobei der Körperabschnitt (14) im Wesentlichen eine rechteckige Form besitzt und zwei gegenüberliegende Seiten und zwei gegenüberliegende Enden aufweist, und wobei jeder Verbindungsabschnitt (18, 20) sich von einer jeweiligen der beiden gegenüberliegenden Seiten des Körperabschnitts (14) erstreckt und die beiden Verbindungsabschnitte (22, 24) einander gegenüberliegen, und wobei jeder Schenkelabschnitt (26, 28) sich im Wesentlichen mit 90° vom Körperabschnitt (14) erstreckt und sich jeder Fußabschnitt (30, 32) im Wesentlichen mit 90° von dem entsprechenden Schenkelabschnitt (26, 28) und im Wesentlichen parallel zum Körperabschnitt (14) erstreckt.

6. Clip-Anordnung (10) nach Anspruch 3, wobei jeder Tragabschnitt (124, 126) eine Vielzahl an sich von diesem erstreckenden Vorsprüngen (130) aufweist.

7. Clip-Anordnung (10) nach Anspruch 6, wobei die Vielzahl an Vorsprüngen (130) Rippen sind.

8. Clip (12) gemäß Anspruch 1 zum Befestigen eines Unterkonstruktionsprofils an einer Tragstruktur, wobei die wenigstens zwei gegenüberliegenden Verbindungspositionen (22, 24) um mindestens 10 mm vom Körperabschnitt (14) beabstandet sind.

9. Clip (12) gemäß Anspruch 1 zum Befestigen eines Unterkonstruktionsprofils an einer Tragstruktur, wobei
die zwei Verbindungsabschnitte gegenüberliegende Verbindungsabschnitte (18, 20) sind, wobei jeder der Verbindungsabschnitte (18, 20) sich quer von einer Seite des Körperabschnitts (14) erstreckt,
die zwei Schenkelabschnitte gegenüberliegende Schenkelabschnitte (26, 28) sind, wobei jeder der Schenkelabschnitte (26, 28) sich quer von einem Ende des Körperabschnitts (14) in eine Richtung weg von den zwei Verbindungsabschnitten (18, 20) erstreckt,
jeder Fußabschnitt (30, 32) im Wesentlichen parallel zum Körperabschnitt (14) liegt und
die zwei gegenüberliegenden Verbindungspositionen (22, 24) jeweils um wenigstens 20 mm von einem entsprechenden der Schenkelabschnitte (26, 28) entfernt sind.

10. Clip (12) gemäß Anspruch 8 oder Anspruch 9, wobei die wenigstens zwei gegenüberliegenden Verbindungspositionen (22, 24) jeweils um wenigstens 25 mm, 30 mm, 35 mm, 40 mm, 45 mm, 50 mm, 55 mm oder 60 mm von einem entsprechenden der Schenkelabschnitte (26, 28) entfernt sind.

11. Clip (12) gemäß einem der Ansprüche 8 bis 10, wobei jeder der Verbindungsabschnitte (18, 20) zwei Sätze zweier gegenüberliegender Verbindungspositionen, drei Sätze zweier gegenüberliegender Verbindungspositionen oder vier Sätze zweier gegenüberliegender Verbindungspositionen aufweist.

12. Clip (12) gemäß einem der Ansprüche 8 bis 11, wobei jede Verbindungsposition (18, 20) durch eine Kerbe oder eine Ausnehmung definiert ist.

13. Anordnung, einen Clip (12) gemäß Anspruch 1 und ein Isolierelement (112) umfassend, wobei das Isolierelement (112) aufweist:
einen im Wesentlichen ebenen Bettabschnitt (314) mit zwei gegenüberliegenden Enden,
zwei Flankenabschnitte (120,122), die sich jeweils von einem gegenüberliegenden Ende des Bettabschnitts (114) mit im Wesentlichen 90° zum Bettabschnitt (114) erstrecken, und
wobei ein Tragabschnitt (124, 126) sich mit im Wesentlichen 90° von jedem Flankenabschnitte (120, 122) erstreckt, wobei jeder der Tragabschnitte (124, 126) eine Vielzahl an Vorsprüngen (130) umfasst, die sich davon in einer Richtung weg von dem Bettabschnitt (114) erstrecken.

## Revendications

1. Étrier (12) pour assembler un profilé de fourrure à une structure de support, l'étrier (12) ayant
une partie de corps (14) pouvant être attachée par rapport à la structure de support ; et
deux parties de connexion (18, 20) connectées à et s'étendant transversalement à partir de la partie de corps (14), chacune des parties de connexion (18, 20) a au moins deux positions de connexion opposées (22, 24) adaptées pour se connecter au profilé de fourrure ;
**caractérisé en ce que** l'étrier (12) a
deux parties de patte (26, 28) s'étendant transversalement à partir de la partie de corps (14) en éloignement des parties de connexion (18, 20) ; et
chaque partie de patte (26, 28) a une partie de pied (30, 32), chaque partie de pied (30, 32) s'étendant transversalement à partir des parties de patte respectives (26, 28), chaque partie de pied (30, 32) s'étendant l'une vers l'autre dans le même plan ;
dans lequel, en utilisation, lorsque la partie de corps (14) est attachée par rapport à la structure de support, chaque partie de pied (30, 32) est proximale à la structure de support et chacune de l'au moins une partie de connexion (18, 20) est distale à la structure de support.

2. Ensemble étrier (10) pour assembler un profilé de fourrure à une structure de support, l'ensemble étrier (10) ayant
un étrier (12) selon la revendication 1 ; et
un élément d'isolation (112) adapté pour au moins recouvrir une partie d'une surface externe de la partie de corps (14), une partie d'une surface externe de chacune de l'au moins une partie de patte (26, 28) et une partie d'une surface externe de chaque partie de pied (30, 32) ;
dans lequel en utilisation, lorsque la partie de corps (14) est attachée par rapport à la structure de support, une partie de l'élément d'isolation (112) est située entre chaque partie de pied (30, 32) et la structure de support.

3. Ensemble étrier (10) selon la revendication 2, dans lequel l'élément d'isolation (112) a une partie de cale (114) adaptée pour au moins recouvrir une partie de la surface externe de la partie de corps (14) de l'étrier (12), une ou plusieurs parties de flanc (120, 122) s'étendant à partir de la partie de cale (114), chacune de l'une ou plusieurs parties de flanc (120, 122) étant adaptée pour au moins recouvrir une partie de la surface externe de l'une correspondante de l'au moins une partie de patte (26, 28), et une partie de support (124, 126) s'étendant depuis chacune de l'une ou plusieurs parties de flanc (120, 122), chaque partie de support (124, 126) étant adaptée pour au moins recouvrir une partie de la surface externe d'une partie de pied correspondante (30, 32) de l'étrier (12).

4. Ensemble étrier (10) selon la revendication 2 ou la revendication 3, dans lequel l'étrier (12) est réalisée en métal pressé, et dans lequel la partie de corps (14) comprend une ouverture (16) adaptée pour recevoir une fixation telle qu'un boulon ou une vis, et comprenant en outre un passe-fil et une virole adaptés pour être insérés dans l'ouverture (16), dans lequel le passe-fil et/ou la virole empêchent un contact direct entre la partie de corps (14) de l'étrier et la fixation.

5. Étrier (12) ou ensemble étrier (10) selon l'une quelconque des revendications précédentes,
dans lequel chaque partie de connexion (18, 20) s'étend à sensiblement 90° depuis la partie de corps (14), et dans lequel la partie de corps (14) est de forme sensiblement rectangulaire et a deux côtés opposés et deux extrémités opposées, et chaque partie de connexion (18, 20) s'étend depuis l'un respectif des deux côtés opposés de la partie de corps (14), et les deux parties de connexion (22, 24) sont opposées l'une à l'autre, et dans lequel chaque partie de patte (26, 28) s'étend à sensiblement 90° depuis la partie de corps (14), et chaque partie de pied (30, 32) s'étend à sensiblement à 90° de la partie de patte correspondante (26, 28) et sensiblement parallèle à la partie de corps (14).

6. Ensemble étrier (10) selon la revendication 3, dans lequel chaque partie de support (124, 126) a une pluralité de saillies (130) s'étendant à partir de celle-ci.

7. Ensemble étrier (10) selon la revendication 6, dans lequel la pluralité de saillies (130) sont des nervures.

8. Étrier (12) selon la revendication 1 pour assembler un profilé de fourrure à une structure de support, dans lequel
les au moins deux positions de connexion opposées (22, 24) sont espacées d'au moins 10 mm de la partie de corps (14).

9. Étrier (12) selon la revendication 1 pour assembler un profilé de fourrure à une structure de support, dans lequel
les deux parties de connexion sont des parties de connexion opposées (18, 20), chacune des parties de connexion (18, 20) s'étendant transversalement à partir d'un côté de la partie de corps (14) ;
les deux parties de patte sont des parties de patte opposées (26, 28), chacune des parties de patte (26, 28) s'étendant transversalement à partir d'une extrémité de la partie de corps (14) dans une direction s'éloignant des deux parties de connexion (18, 20) ;
chaque partie de pied (30, 32) est sensiblement parallèle à la partie de corps (14) ; et
les deux positions de connexion opposées (22, 24) sont chacune espacées d'au moins 20 mm de l'une correspondante des parties de patte (26, 28).

10. Étrier (12) selon la revendication 8 ou la revendication 9, dans lequel les au moins deux positions de connexion opposées (22, 24) sont chacune espacées d'au moins 25 mm, 30 mm, 35 mm, 40 mm, 45 mm, 50 mm, 55 mm ou 60 mm de l'une correspondante des parties de patte (26, 28).

11. Étrier (12) selon l'une quelconque des revendications 8 à 10, dans lequel chacune des parties de connexion (18, 20) comprend deux ensembles de deux positions de connexion opposées, trois ensembles de deux positions de connexion opposées ou quatre ensembles de deux positions de connexion opposées.

12. Étrier (12) selon l'une quelconque des revendications 8 à 11, dans lequel chaque position de connexion (18, 20) est définie par une encoche ou un évidement.

13. Ensemble comprenant un étrier (12) selon la revendication 1 et un élément d'isolation (112), l'élément d'isolation (112) ayant
une partie de cale sensiblement plane (114) ayant deux extrémités opposées ;
deux parties de flanc (120, 122), chacune s'étendant depuis une extrémité opposée de la partie de cale (114) à sensiblement 90° vers la partie de cale (114) ; et
une partie de support (124, 126) s'étend à sensiblement 90° de chacune de la partie de flanc (120, 122), chacune des parties de support (124, 126) comprenant une pluralité de saillies (130) s'étendant à partir de celle-ci dans une direction s'éloignant de la partie de cale (114).
